# EUROPÄISCHE PATENTANMELDUNG

(11) **EP 1 674 754 A2**
(43) Veröffentlichungstag der Anmeldung: **28.06.2006**
(21) Anmeldenummer: 05026294.8
(22) Anmeldetag: 02.12.2005
(51) Int. Cl.: F16D 48/02

(54) **Hydraulische Betätigungseinrichtung für eine Reibungskupplung eines Kraftfahrzeuges**

(30) Priorität: 24.12.2004 DE 102004062554
(71) Anmelder: ZF FRIEDRICHSHAFEN AG, 88046 Friedrichshafen (DE)
(72) Erfinder: Rieß, Thomas, 97437 Hassfurt (DE)

(57) **Zusammenfassung**

Es wird eine hydraulische Betätigungseinrichtung (10) für eine Reibungskupplung (12) eines Kraftfahrzeuges beschrieben. Diese ist umfass einen mittels- eines Kupplungspedals (30) betätigbaren Geberzylinder (16) und einen mit diesem über eine Hydraulikleitung (26) durch einen Fluidkanal (27) verbundenen Nehmerzylinder (20), wobei die vorgenannten Elemente (16,26,28) einen Druckraum (28) bilden, in welchem ein Drosselglied (29) zur zeitweiligen Begrenzung des Fluidkanalquerschnitts angeordnet ist. Die Erfindung schlägt vor, das Drosselglied (29) mit einer Ansteuervorrichtung (90) zu ergänzen, wodurch das Drosselglied (29) bei Vorliegen mindestens eines, von einer Betriebszustandserfassungseinrichtung (94) erfassten vorbestimmten Betriebszustandes des Kraftfahrzeuges aktivierbar ist.

## Beschreibung

Die Erfindung betrifft eine hydraulische Betätigungseinrichtung für eine Reibungskupplung eines Kraftfahrzeuges gemäß dem Oberbegriff des Patentanspruchs 1.

Eine gattungsgemäße Betätigungseinrichtung mit einem Drosselglied wird beispielsweise in der DE 43 34 551 C2 beschrieben, wobei in einem Ventilgehäuse des Drosselglieds ein Ventilkörper in Form eines scheibenförmigen Schließorgans verschiebbar gehalten ist, dessen als Dichtfläche ausgebildete Stirnseite durch eine Druckfeder gegen eine entsprechende Dichtfläche des Ventilgehäuses anliegt. Die Druckfeder wirkt dem Fluß der Hydraulikflüssigkeit vom Geberzylinder zum Nehmerzylinder entgegen, wobei das Schließorgan bei Beaufschlagen durch die Hydraulikflüssigkeit in dieser Flußrichtung den Durchflußquerschnitt vergrößert.
Somit wird das bekannte Drosselglied selbsttätig bei jeder Pedalbetätigung in Abhängigkeit von der Strömungsrichtung und ggf. von der Strömungsgeschwindigkeit des Fluids aktiviert, wobei als Betriebszustände lediglich offen und geschlossen dargestellt werden können. Das bekannte Drosselglied muß ferner so optimiert werden, dass ein Kompromiss zwischen der geringsten noch zulässigen Pedalrücklaufzeit bei Tieftemperatur und der mindestens erreichten Reduzierung der Drehmomentspitze bei Hochtemperatur erzielt wird.

Das bekannte Drosselglied ist in der Lage, den Fluidkanalquerschnitt und damit die Einkuppelgeschwindigkeit zu reduzieren, was insbesondere bei einem Gangwechsel unzulässig hohe Einkuppelgeschwindigkeiten vermeiden hilft. Dennoch treten ebenso häufig Fahrzustände auf, insbesondere beim Anfahren, bei denen trotz Vorhandensein eines Drosselgliedes und einer dadurch reduzierten Einkuppelgeschwindigkeit beim Einkuppeln Drehmomentstöße in den Antriebsstrang eingeleitet werden, weil die Drehzahl des Verbrennungsmotors der jeweiligen Situation nicht angepasst ist, was ungünstigerweise zum Absterben des Verbrennungsmotors führen kann. Wenn dieses bspw.an einer Steigung oder in einem Verkehrsraum mit hohem Verkehrsaufkommen, z.B.in einem innerstädtischen Kreuzungsbereich auftritt, so kann es dadurch zu einer Gefährdung der Fahrzeuginsassen und anderer Verkehrsteilnehmer und zu Unfällen kommen.

Die Erfindung hat die Aufgabe, ein Kupplungsbetätigungssystem mit einfachen Mitteln dahingehend zu verbessern, dass die Gefahr eines Abwürgens des Verbrennungsmotors beim Einkuppeln der Fahrzeugreibungskupplung reduziert wird.

Die Erfindung löst die gestellte Aufgabe mit einer hydraulischen Betätigungseinrichtung, welche die Merkmale des Anspruchs 1 aufweist.

Der Erfinder hat zunächst erkannt, dass für ein ruckfreies Einkuppeln nicht allein die Einkuppelgeschwindigkeit entscheidend ist, sondern es vielmehr darauf ankommt, dass die Einkuppelgeschwindigkeit, d.h. die Zustellbewegung der axial beweglichen Kupplungsdruckplatte und die momentane Leistung des Verbrennungsmotors, d.h. das Produkt aus Drehzahl und Drehmoment, aufeinander abgestimmt sein müssen. Davon ausgehend schlägt die Erfindung vor, dem Drosselglied eine Ansteuervorrichtung zuzuordnen, womit das Drosselglied beim Vorliegen mindestens eines vorbestimmten Betriebszustandes des Kraftfahrzeuges frei aktivierbar ist. Dabei ist zur Erfassung dieses Zustandes ene eine Betriebszustandserfassungseinrichtung vorgesehen. Das bedeutet, dass das Drosselglied nicht generell beim Einkuppeln aktiviert wird, sondern erst, wenn dieses die konkrete Betriebssituation tatsächlich auch erfordert.

Nur in dem Fall, wenn ein Missverhältnis von Einkuppelgeschwindigkeit und Motorleistung vorliegt, so kann das Drosselglied im Sinne einer Verringerung des Fluidkanalquerschnitts aktiviert werden und den Einkuppelvorgang kurzzeitig und vom Fahrer unbemerkt verzögern, bis der Verbrennungsmotor wieder eine stabile, fern des Absterbens liegende Drehzahl eingenommen hat und das weitere Schließen der Reibungskupplung sicher möglich ist.

Durch die erfindungsgemäße Lösung kann, sofern die Drehzahl des Verbrennungsmotors prinzipiell ein Anfahren ermöglicht, das Absterben des Verbrennungsmotors sicher vermieden und dadurch die Betriebs- und die Verkehrssicherheit erhöht werden.

Weiterhin sind nunmehr auch extrem zügige Einkuppelvorgänge, welche bisher sehr stark vom Pedalgefühl und vom Fahrkönnen abhängig waren, vereinfacht möglich, indem bspw. bei einem Rennstart das Drosselglied auf eine gegenüber einem normalen Anfahrvorgang erhöhte Verbrennungsmotordrehzahl abgestimmt und aktiviert wird. Dazu kann das Drosselglied z.B. intermittierend betrieben werden und damit ein zeitlich gemittelter gewünschter Fluidkanalquerschnitt und eine sich daraus ergebende Fluidströmungsgeschwindigkeit für die kritische Fahrsituation realisiert werden.

Von herausragender Bedeutung ist, dass insbesondere ein Anfahrvorgang, aber auch allgemein ein Einkuppelvorgang nicht weiter durch die dynamische Balance von Fahr-und Kupplungspedal gesteuert werden muss, sondern für den Fahrer bei dessen Wunsch stark vereinfacht ablaufen kann, indem bei aktivierten Drosselglied das Kupplungspedal vom Fuß ohne besonderes Gefühl entlastet wird und das Einkuppeln lediglich mittels des Fahrpedals vom Fahrer gesteuert wird. Die vorgeschlagene hydraulische Betätigungseinrichtung stellt in dieser Hinsicht somit einen Anfahrassistenten zur Entlastung des Fahrers bereit.

Darüberhinaus kann das in der hydraulischen Betätigungseinrichtung angeordnete frei ansteuerbare Drosselglied auch als Peak Torque Limiter oder als Dämpfungsglied zur Reduzierung eines Kupplungspedalkribbeins angesteuert oder geregelt werden.

Vorteilhafte Weiterbildungen und Ausgestaltungen der Erfindung sind in den Unteransprüchen angegeben.

Die Erfindung wird anhand der nachfolgenden Beschreibung und der Figuren beispielhaft erläutert. Es zeigen:
- Fig. 1: eine schematische Darstellung einer hydraulischen Betätigungseinrichtung für eine Kraftfahrzeugkupplung mit einem darin angeordneten Drosselglied,
- Fig. 2: eine Axialschnittdarstellung eines frei schaltbaren Drosselgliedes in einer geöffneten Stellung,
- Fig. 3: eine Darstellung gemäß Fig. 2, wobei das Drosselglied eine gedrosselte Stellung einnimmt,
- Fig. 4: ein Drosselglied gemäß Fig. 1, welches zusätzlich eine Öffnungsspule aufweist,
- Fig. 5: eine schematische Darstellung elektrischer Signal- und Leistungsflüsse für eine hydraulische Betätigungseinrichtung,
- Fig. 6: ein zeitlicher Verlauf eines Anfahrvorganges bei Leerlaufdrehzahl ohne und mit als Anfahrassistent arbeitendem Drosselglied, welches nur eine Schließspule aufweist,
- Fig. 7: ein zeitlicher Verlauf eines Anfahrvorganges bei Leerlaufdrehzahl ohne und mit als Anfahrassistent arbeitendem Drosselglied, welches eine Schließspule und eine Öffnungsspule aufweist,
- Fig. 8: ein zeitlicher Verlauf eines Anfahrvorganges bei einer gegenüber Leerlaufdrehzahl erhöhten Drehzahl ohne und mit als Anfahrassistent arbeitendem Drosselglied, welches nur eine Schließspule aufweist,
- Fig. 9: ein zeitlicher Verlauf eines Anfahrvorganges bei einer gegenüber Leerlaufdrehzahl erhöhten Drehzahl ohne und mit als Anfahrassistent arbeitendem Drosselglied, welches eine Schließspule und eine Öffnungsspule aufweist,
- Fig. 10: ein zeitlicher Verlauf eines Anfahrvorganges bei einer gegenüber Leerlaufdrehzahl erhöhten Drehzahl und schlagartigem Einkuppeln ohne Verwendung eines Peak Torque Limiters,
- Fig. 11: ein zeitlicher Verlauf eines Anfahrvorganges bei einer gegenüber Leerlaufdrehzahl erhöhten Drehzahl und schlagartigem Einkuppeln mit einem als Peak Torque Limiter geregeltem Drosseiglied.

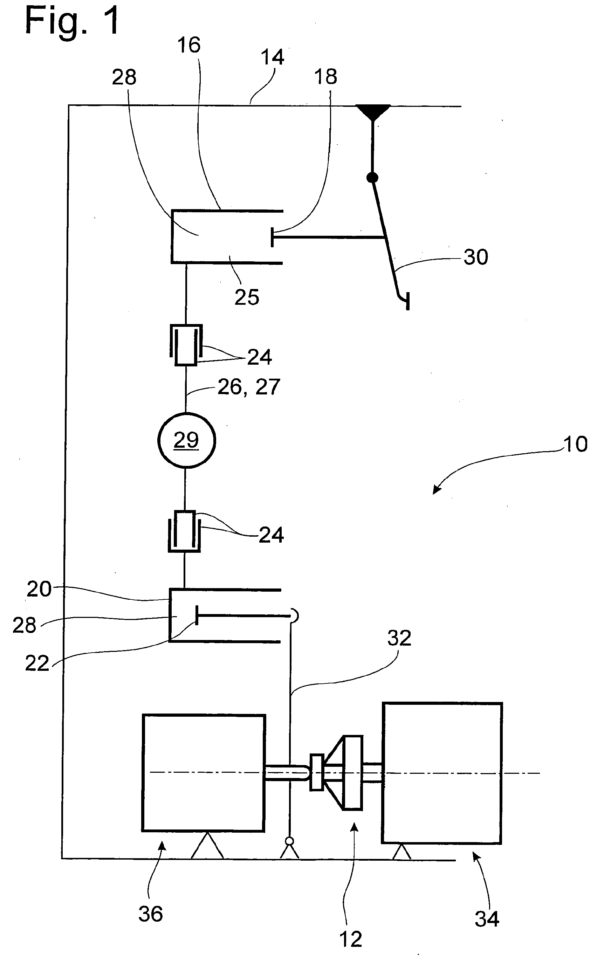

Gemäß Fig. 1 wird schematisch eine hydraulische Betätigungseinrichtung 10 zum Betätigen einer Reibungskupplung 12 gezeigt, welche an einem Chassis 14 eines Kraftfahrzeugs angeordnet ist und wobei ein Geberzylinder 16 mit einem Kolben 18 und ein Nehmerzylinder 20 mit einem Kolben 22 angeordnet sind, die miteinander über Steckkupplungen bzw. Hydraulikkupplungselemente 24 mit einer fluidbefüllten Hydraulikleitung 26 durch einen Fluidkanal 27verbunden sind und einen gemeinsamen Druckraum 28 ausbilden. Der Kolben 18 des Geberzylinders 16 kann durch ein Kupplngspedal 30 betätigt werden, woraufhin sich der Kolben 22 des Nehmerzylinders 20 verschiebt und eine Kupplungsgabel 32 zum Ausrücken der Kupplung 12 an einem als Verbrennungsmotor 34 ausgebildeten Antriebsaggregat steuert. Die Kupplung 12 ist eingangsseitig mit der Abtriebswelle des Verbrennungsmotors 34 und ausgangsseitig mit einem Schaltgetriebe 36 verbunden. Innerhalb der Hydraulikleitung 26 ist ein frei aktivierbares Drosselglied 29 zur zeitweiligen Beeinflussung, d.h. einer Verringerung des Fluidkanalquerschnitts zur bedarfsweisen Drosselung des Fluidstromes und somit zur Erniedrigung der Einkuppelgeschwindigkeit vorgesehen, dessen Aufbau und Wirkungsweise nachfolgend detailliert beschrieben werden.
Das Drosselglied 29 kann je nach Einbausituation separat ausgeführt und über Hydraulik-Kupplungselemente 24 an einer beliebigen Position mit der Hydraulikleitung 26 bzw. einem der Druckzylinder 16, 20 verbunden werden oder alternativ integral mit der Hydraulikleitung 26 oder einem der Druckzylinder 16, 20 dargestellt werden.

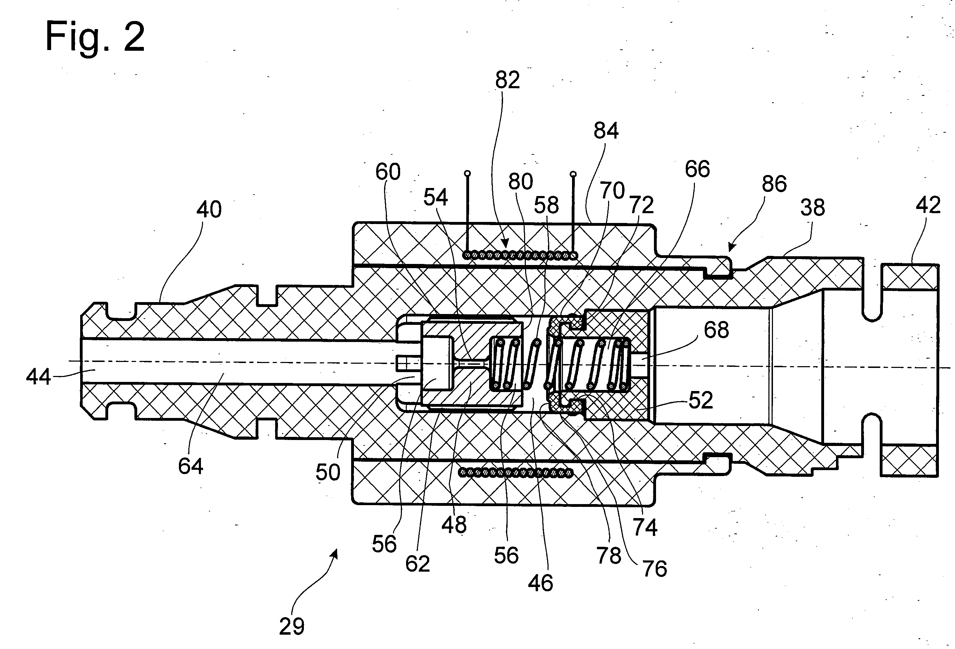

Fig. 2 zeigt eine Axialschnittdarstellung eines frei aktivierbaren Drosselgliedes 29 zur Anordnung innerhalb des hydraulischen Druckraumes.

Das Drosselglied 29 umfasst ein Kunststoffgehäuse 38 mit beidseitigen Steckanschlüssen 40, 42 zur einfachen Montage in der hydraulischen Betätigungseinrichtung 10. Das Gehäuse 38 weist eine mehrfach gestufte axiale Durchgangsbohrung 44 als Bestandteil des Fluidkanals 27 auf, in deren Mittelabschnitt 46 ein Kolben 48 axial gleitbeweglich zwischen zwei stirnseitig gehäusefesten Anschlägen 50, 52 verlagerbar ist. Der Kolben 48 weist im Inneren ebenfalls in axialer Richtung eine Durchgangsbohrung 54 mit einem gegenüber dem Fluidkanal 27 reduziertem Querschnitt auf, welche stirnseitig zur Bildung einer Aufnahmekammer 56 zur zumindest teilweisen Aufnahme einer als Rückstellelement dienenden Druckfeder 58 erweitert ist. An der Außenumfangsfläche des Kolbens 48 sind mehrere Axialstege 60 ausgebildet, die zu dessen spielfreien Führung in dem Bohrungsabschnitt 46 anliegen und zwischen sich eine entsprechende Anzahl von axialverlaufenden Fluidkanälen 62 definieren. Zur Erhöhung der Montagesicherheit ist der Kolben 48 axialsymmetrisch ausgeführt, d.h. dass auch an der der Druckfeder 58 abgewandten Stirnseite eine Aufnahmekammer 56 ausgeführt ist. Der Kolben 48 stützt sich in der in Fig. 2 dargestellten Lage links an einem mit dem Gehäuse 38 ausgeführten Anschlag 50 ab, wobei jedoch der Durchtritt von Fluid sowohl durch die zentrale Durchgangsbohrung 54 als auch über die außen liegenden Kanäle 62 ungehindert möglich ist. Der Gesamtquerschnitt der Kanäle 54, 62 am Kolben 48 ist mindestens so groß bemessen, dass dieser dem Querschnitt eines angrenzenden, im Gehäuse 38 befindlichen Kanalabschnittes 64 entspricht, wodurch ein im Fluidkanal 27 strömendes Fluid ungedrosselt den Kolben 48 durch- und umströmen kann.

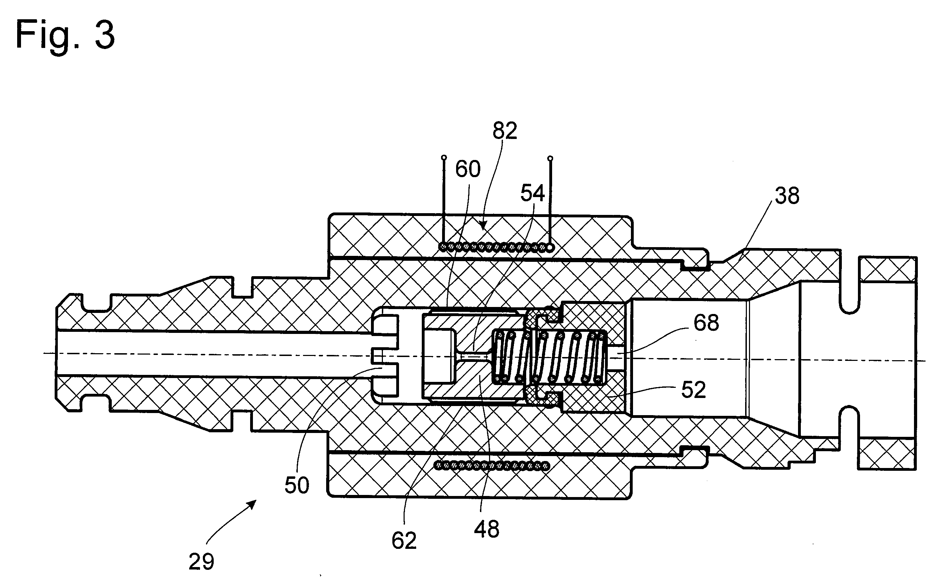

Der axialseitig gegenüberliegende als Scheibe ausgebildete Anschlag 52 weist analog zum Kolben 48 eine weitere Aufnahmekammer 66 zur zumindest teilweisen Aufnahme der Druckfeder 58 und eine demgegenüber im Durchmesser reduzierte Durchgangsbohrung 68 zum Durchtritt des Hydraulikfluids auf, wobei deren Durchmesser ebenfalls so bemessen ist, dass im Wesentlichen keine Reduzierung des Fluidkanalquerschnittes in dem hydraulischen System 10 zu verzeichnen ist. Der Anschlag 52 ist günstigerweise als separates, zylindrisches Kunststoffelement ausgeführt und wird im Gehäuse 38 nach dem Einbringen des Kolbens 48 und der Druckfeder 58 dichtend eingepresst. An dem zum Kolben 48 gewandten Stirnbereich kann bei Bedarf zusätzlich ein Dichtelement 70 angeordnet sein, welches mit einem radial nach innen gerichteten Ringsteg 72 in eine an der Außenumfangsfläche des Anschlags 52 eingebrachte Ringnut 74 eingreift und mit einem ersten Dichtbereich 76 den Anschlag gegenüber dem Gehäuse 38 und mit einem zweiten Dichtbereich 78 den Anschlag 52 gegenüber einen radial außenliegenden Ringsteg 80 des Kolbens 48 bei dessen Anlage am Anschlag 52 abdichten kann, wie dieses in Fig. 3 ersichtlich ge am Anschlag 52 abdichten kann, wie dieses in Fig. 3 ersichtlich ist. In dieser Lage sind die äußeren Kanäle 62 gesperrt und ein Durchtritt von Fluid ist nur noch durch den zentralen Kanal 54 möglich, wodurch eine erhebliche Drosselung des Fluidstromes erzielt wird. Sofern ein Dichtelement 70 vorgesehen ist, wird dieses an dem Anschlag 52 vormontiert, worauf dann beide Teile 52, 70 gemeinsam in das Gehäuse 38 eingepresst werden können.

Alternativ kann auch auf die im Kolben 48 ausgeführte zentrale Durchgangsbohrung 54 verzichtet werden. Sofern ein zusätzliches Dichtelement 70 vorgesehen ist, kann auf die Dichtheit zwischen Gehäuse 38 und dem äußeren Wandungsbereich des Anschlags 52 verzichtet werden.

Der Kolben 48 ist innerhalb der hydraulischen Betätigungseinrichtung 10 so angeordnet, dass dieser eine Ausgangslage gemäß Fig. 2 einnimmt und sich nur unter der Wirkung einer äußeren, vorgebbaren Kraft, vorzugsweise bei zumindest einem vorbestimmten Betriebszustand des Fahrzeuges entgegen der Wirkung der Druckfeder 58 in Richtung des Anschlags 52, also in Richtung des Nehmerzylinders 20 verlagern kann und dabei den Fluidkanalquerschnitt und die Fluidströmungsgeschwindigkeit verringert und diesen bei Abwesenheit der Bohrung 54 sogar vollständig unterbindet. Dabei kann der Fluidkanalquerschnitt auch frei wählbare Werte zwischen einem Minimal- und einem Maximalwert einnehmen, die sich ergeben, wenn der Kolben nur teilweise zum Anschlag 52 verlagert wird.

Die zwischen Kolben 48 und Anschlag 52 angeordnete Druckfeder 58 ist so ausgelegt, dass deren Federkraft ausreichend hoch ist, um den Kolben 48 entgegen der Strömung bei maximaler Strömungsgeschwindigkeit und einer sich bei tiefen Temperaturen einstellenden ungünstigsten Fluidviskosität in Fig. 2 am linken Anschlag 50 zuhalten, solange die äußere Kraft nicht wirkt. Ebenso sollte beim Entzug der äußeren Kraft der Kolben 48 auch entgegen der Fluidströmung innerhalb sehr kurzer Zeit von dem Anschlag 52 in Richtung des linksseitigen Anschlags 50 verlagerbar sein, um den Fluidkanalquerschnitt zu vergrößern. Das Drosselglied 29 nimmt in der erläuterten Bauweise eine Normal-Offen-Stellung ein, wodurch dieses ausfallsicher gestaltet ist. Somit ist auch bei einem Defekt des Drosselgliedes 29 ein kontrolliertes und sicheres Betriebsverhalten der hydraulischen Betätigungseinrichtung 10 und des Fahrzeuges gewährleistet.

Zur Beeinflussung des Kolbens 48 ist im dargestellten Ausführungsbeispiel das Drosselglied 29 als Magnetventil ausgebildet. Dazu ist der Kolben 48 zumindest teilweise aus einem ferromagnetischen Werkstoff gefertigt, indem dieser z.B. als kunststoffummantelter Eisenringkern ausgebildet ist, der von einem Magnetfeld einer am Gehäuse 38 angeordneten Magnetspule 82 mit einer Axialkraft beaufschlagbar ist, wodurch die beschriebene Stellbewegung des Kolbens 48 unabhängig von der Strömungsrichtung des Fluids innerhalb des Druckraumes 28 ausführbar ist. Die als Schließspule arbeitende Magnetspule 82 ist in einem separaten Isolierkörper 84 eingebettet, der auf das Gehäuse 38 aufgeschoben und mit einer Rastverbindung 86 unverlierbar an diesem gehalten wird. Es ist auch möglich, die Magnetspule 82 unmittelbar auf dem Gehäuse 38 aufzubringen und mit diesem zu vergießen.

Wenn sich der Kolben 48 im Bereich des Anschlags 52 befindet, so kann bei einer entsprechenden Strombeaufschlagung der Schließspule 82 das Drosselglied 29 den Fluidkanalquerschnitt kontinuierlich zwischen einem Maximalwert und einem Mini-malwert je nach Vorgabe beliebig einstellen.

Die axiale Lage der Magnetspule 82 ist am Gehäuse 38 so festgelegt, dass im bestromten Zustand eine Magnetkraft auf den Kolben 48 in Richtung des Anschlags 52 ausgeübt wird, wodurch der Kolben 48 entgegen der Kraftwirkung der Rückstellfeder 58 an den Anschlag 52 und ggf. an das Dichtelement 70 gepresst wird, um die am Kolbenaußenbereich befindlichen Kanäle 62 für das Fluid vollständig zu sperren.

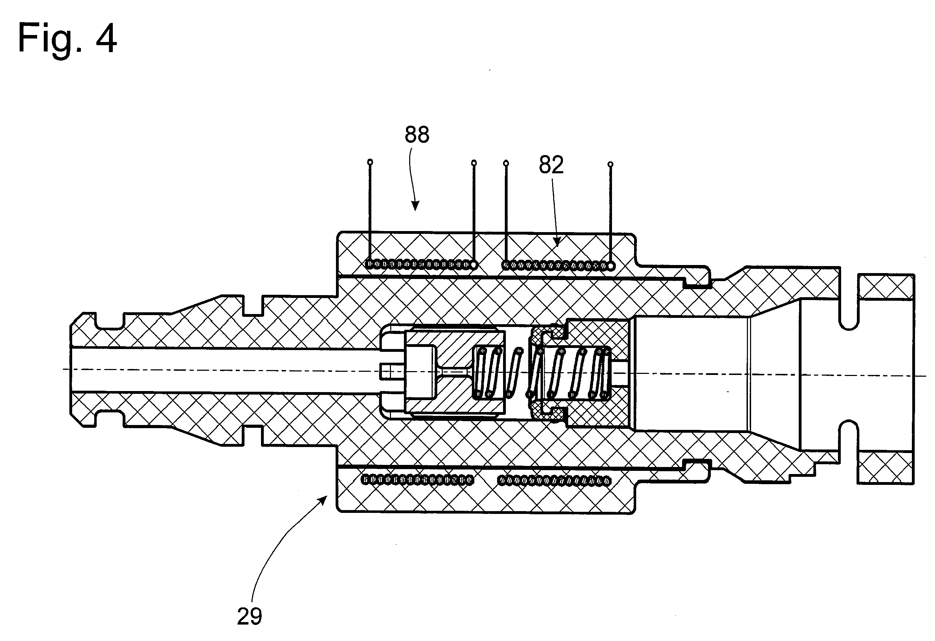

Zusätzlich oder alternativ zu der Rückstellfeder 58 kann, wie in Fig. 4 dargestellt, am Gehäuse 38 eine zweite, als Öffnungsspule arbeitende Magnetspule 88 angeordnet sein, welche bei deren Bestromung den Kolben 48 allein oder mit Unterstützung der Rückstellfeder von dem Anschlag 52 ablöst und diesen in die Ausgangsstellung gemäß Fig. 2 zurück verlagern kann. Dazu ist die Öffnungsspule 88 ebenfalls in dem Isolierkörper 84 eingebettet und axial benachbart zu der Schließspule 82, auf Höhe des linksseitigen Anschlags 50 angeordnet. Zur Verlagerung des Kolbens 48 können auch beide Spulen 82, 88 gleichzeitig in definierter Weise mit Strom beaufschlagt werden, um auf diese Weise die Verstellgeschwindigkeit des Kolbens 48 an ein gewünschtes Maß anzupassen.

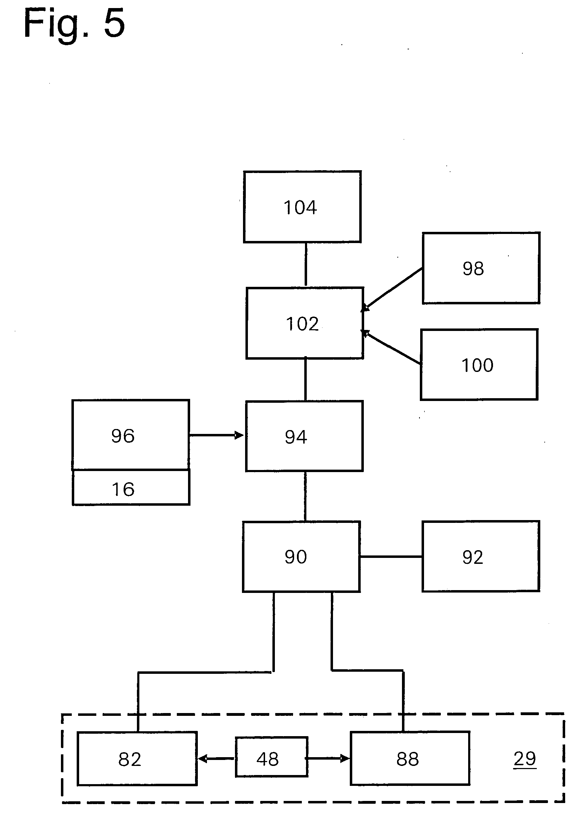

Die Spulen 82,88 sind gemäß Fig. 5 elektrisch über eine Ansteuervorrichtung, d.h. eine Ansteuerelektronik 90 mit dem Fahrzeugbordnetz 92 verbunden, wobei die Ansteuerelektronik 90 erst bei Vorliegen eines von einer Betriebszustandserfassungseinrichtung 94 bestimmten Betriebszustandes des Kraftfahrzeuges einen Befehl zur Aktivierung der Schließ- 82 bzw. der Öffnungsspule 88 erhält.

Die Betriebszustandserfassungseinrichtung 94 kann dazu im Bedarfsfall wahlweise mit einem Sensor 96 zur Detektierung der Kolbenstellung im Geberzylinder 16 und dem Steuergerät 102 des Verbrennungsmotors 34 kommunizieren, wobei über letzteres auch gleichzeitig die Datengewinnung von einem Drehzahlsensor 98 zur Ermittlung der Kurbelwellendrehzahl des Verbrennungsmotors 34 und von einem Drosselklappenstellungsgeber 100 möglich ist. Diese Sensoren sind in Kraftfahrzeugen ohnehin bereits vorhanden, so dass diesbezüglich keine zusätzlichen Anforderungen bestehen. Die Betriebszustandserfassungseinrichtung 94 ist über das Motorsteuergerät 102 auch mit einer zentralen Fahrzeugsteuerung 104 verbunden und kann somit auch optional die Fahrzeuggeschwindigkeit bei der Ermittlung des Betriebszustandes berücksichtigen. Die Signale der Sensoren 96, 98, 100 werden von der Betriebszustandserfassungseinrichtung 94 erfasst und mittels einer Logikschaltung auf das Vorliegen eines vorbestimmten Betriebszustandes überwacht. Über die Signalleitung zum Steuergerät 102 kann auch von der Betriebszustandserfassungseinrichtung 94 aus der Betrieb des Verbrennungsmotors 34 beeinflusst werden, bspw. indem bei einer Leistungs- oder Drehmomentanforderung die Drosselklappenstellung entsprechend beeinflusst wird. Wie dieses untenstehend erläutert wird, können je nach gewünschter Funktion des Drosselgliedes 29 die Signale verschiedener Sensoren allein oder gemeinsam zur Auswertung und Aktivierung des Drosselgliedes 29 herangezogen werden.

Nachfolgend werden beispielhaft verschiedene Betriebsarten, sofern nicht anderweitig beschrieben, des in Fig. 4 dargestellten Drosselgliedes 29 und der hydraulischen Betätigungseinrichtung 10 gemäß Fig. 5 erläutert.

### I Normalbetrieb - nichtaktiviertes Drosselglied

Während des normalen Betriebes sind beide Magnetspulen 82, 88 nicht bestromt. Der Kolben 48 wird von der Druckfeder 58 gegen den Gehäuseanschlag 50 gedrückt, wodurch für das durch das Drosselglied 29 hindurchtretende Fluid der maximale Kanalquerschnitt, gebildet durch die Kanäle 62 am Kolbenaußenbereich und der zentralen Bohrung 54 zur Verfügung steht.

### II Betriebsart Anfahrassistent

Wenn durch den Sensor 96 ein Einkuppelvorgang der Reibungskupplung 12 detektiert wird und dabei die vom Drehzahlsensor 98 an die Betriebszustandserfassungseinrichtung 94 übermittelte Motordrehzahl sich unterhalb einer voreingestellten Eingriffsgrenze befindet, so wird erkannt, dass sich der Verbrennungsmotor 34 in einen Abwürgezustand hinbewegt. Daraufhin wird die Ansteuerelektronik 90 angewiesen, die Schließspule 82 mit einem Strom zu beaufschlagen. Dabei wird der Kolben 48 entgegen der Wirkung der Druckfeder 58 an den Anschlag 52 gepresst und damit der bisher vollständig offene Fluidkanalquerschnitt auf die vergleichsweise kleine Bohrung 54 im Inneren des Kolbens 48 beschränkt. Die Kupplung 12 kann sich aufgrund des dadurch einstellenden sehr hohen Strömungswiderstandes nur noch so langsam schließen, dass die Leistung des Verbrennungsmotors 34 auch bei niedriger Drehzahl ausreicht, um ein Abwürgen zu verhindern. Sobald durch den Sensor 98 eine über dem kritischen Wert liegende Drehzahl detektiert wird, so erkennt die Betriebszustandserfassungseinrichtung 94, dass die Gefahr des Abwürgens des Verbrennungsmotors 34 nicht weiter gegeben ist, worauf die Magnetspule 82 wieder stromlos geschaltet wird. Die Druckfeder 58 verschiebt den Kolben 48 wieder in dessen Ausgangslage zum Gehäuseanschlag 54, womit die Einwirkung auf das hydraulische Kupplungsbetätigungssystem 10 aufgehoben ist.

Die Aktivierung und Abschaltung des Drosselgliedes 29 als Anfahrassistent kann je nach Notwendigkeit verhältnismäßig hochfrequent und häufig erfolgen. Zur weiteren Verbesserung der Dynamik ist es auch möglich, beim Abschalten des Drosselgliedes 29 kurzzeitig die Öffnungsspule 88 zu aktivieren, um die Rückstellbewegung des Kolbens 48 zu unterstützen. Nach einem kurzen Öffnungsimpuls kann die Öffnungsspule 88 wieder stromlos geschaltet werden. Beim Vorsehen einer Öffnungsspule 88 kann der Strömungsquerschnitt der Kolbenbohrung 54 nochmals verkleinert gewählt werden und bei einer hochdynamischen Auslegung des Betätigungssystems 10 kann sogar auf die Bohrung 54 ganz verzichtet werden.

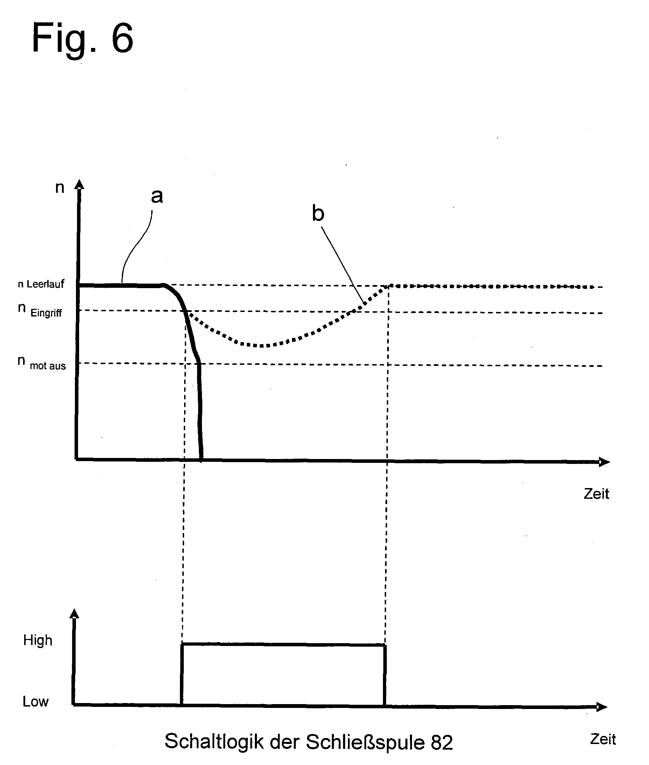

In Fig. 6 ist der zeitliche Verlauf eines Anfahrvorganges bei Leerlaufdrehzahl (n_Leerlauf) des Verbrennungsmotors 34 ohne und mit als Anfahrassistent arbeitenden Drosselglied 29 dargestellt, wobei dieses zunächst lediglich eine Schließspule 82 aufweist. Kurve a beschreibt den Verlauf der Motordrehzahl bei einer zu schnellen Einkuppelgeschwindigkeit beim Anfahren mit Leerlaufdrehzahl (n_Leerlauf), wobei der vollständige Eingriff der Kupplung 12 bei einer Eingriffsdrehzahl (n_Eingriff) unterhalb der Leerlaufdrehzahl (n_Leerlauf) erfolgt. Die Leistung des Verbrennungsmotors 34 ist dabei nicht ausreichend, um das Fahrzeug in der kurzen Einkuppelzeit auf eine Geschwindigkeit zu beschleunigen, die der Motormindestdrehzahl im eingelegten Gang entspricht. Die Drehzahl fällt somit unter eine kritische, die Abschaltgrenze des Motors darstellende Drehzahl (n_mot aus) ab, wobei der Motor 34 abgewürgt wird.

Kurve b beschreibt einen Anfahrvorgang unter identischen Randbedingungen, wobei jedoch das Drosselglied 29 bei Erreichen der Eingriffsdrehzahl (n_Eingriff) als Anfahrassistent aktiviert wird. Ab diesem Zeitpunkt reduziert der Anfahrassistent die Einkuppelgeschwindigkeit. Der Motor 34 hat ausreichend Zeit, das Fahrzeug mittels schlupfender Kupplung 12 auf eine ausreichend hohe Geschwindigkeit zu beschleunigen, ohne dass die Motordrehzahl unter die Abschaltgrenze (n_mot aus) absinkt.

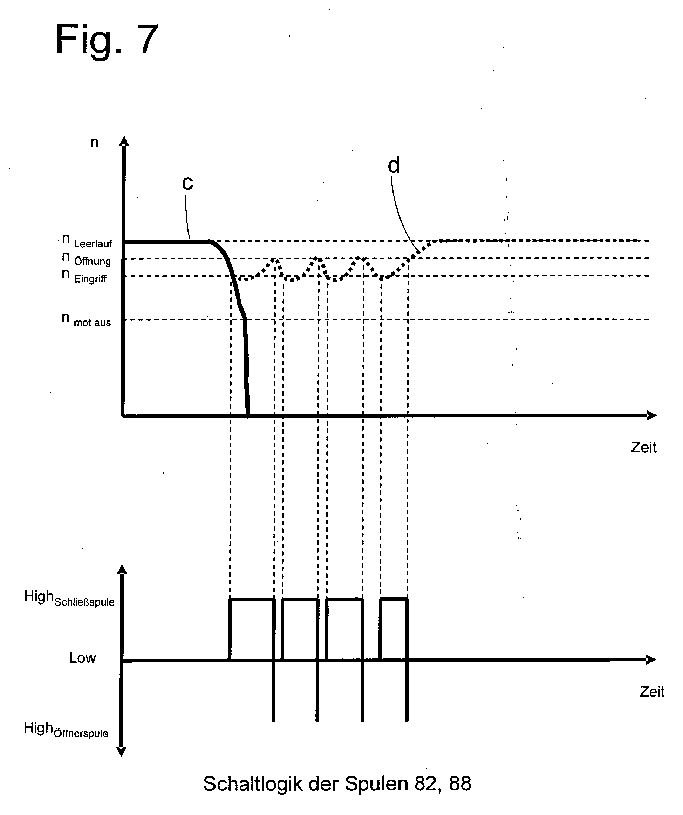

Fig. 7 zeigt den Verlauf eines Anfahrvorganges bei Leerlaufdrehzahl (n_Leerlauf) ohne und mit als Anfahrassistent arbeitenden Drosselglied 29, welches eine Schließspule 82 und zusätzlich eine Öffnungsspule 88 aufweist. Die Kurve c entspricht dem Verlauf der Kurve a in Fig. 6, welche den Verlauf der Motordrehzahl bei einer zu schnellen Einkuppelgeschwindigkeit beim Anfahren mit Leerlaufdrehzahl (n_Leerlauf) beschreibt. Die Motorleistung ist dabei nicht ausreichend, um das Fahrzeug in der kurzen Einkuppelzeit auf eine Geschwindigkeit zu beschleunigen, die der Motormindestdrehzahl im eingelegten Gang entspricht. Die Drehzahl fällt unter die Abschaltgrenze (n_mot aus) des Motors 34, woraufhin dieser abgewürgt wird.

Kurve d beschreibt den Verlauf der Motordrehzahl mit aktiviertem Anfahrassistenten bei zusätzlicher Bestromung der Schließspule 88. Sobald die Eingriffsdrehzahl (n_Eingriff) erreicht wird, reduziert das ab diesem Zeitpunkt aktivierte Drosselglied 29 aufgrund der Auslegung des Kolbens 48 mit einer Durchgangsbohrung 54 mit noch kleinerem Strömungsquerschnitt die Einkuppelgeschwindigkeit noch stärker. Die Motordrehzahl stabilisiert sich schneller; der Drehzahlabfall gegenüber der Eingriffsgrenze (n_Eingriff) ist geringer und die Drehzahl steigt vergleichsweise zügig wieder über eine festgelegte Drehzahl (n_Öffnung) zur impulsweisen Aktivierung der Öffnungsspule 88 des Anfahrassistenten. Da das Fahrzeug noch nicht auf eine ausreichend hohe Geschwindigkeit beschleunigt wurde, fällt die Drehzahl wieder ab, worauf die Schließspule 82 erneut aktiviert wird. Der Vorgang wiederholt sich solange, bis das Fahrzeug mittels schlupfender Kupplung 12 auf eine ausreichend hohe Geschwindigkeit beschleunigt wurde. Mit einer derartigen höherfrequenten Regelung kann die zur Regelung notwendige Drehzahlbandbreite um die Eingriffsgrenze (n_Eingriff) geringer -gehalten werden. Dies ist insbesondere dann von Vorteil, wenn die Leerlaufdrehzahl (n_Leerlauf) nahe an der Abschaltgrenze (n_mot aus) des Motors 34 liegt.

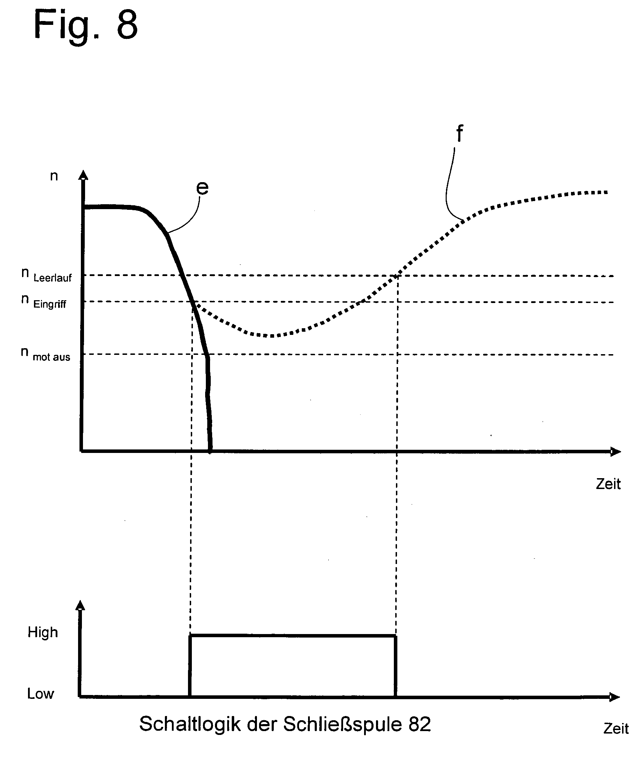

In Fig. 8 ist der zeitliche Verlauf eines Anfahrvorganges bei einer gegenüber Leerlaufdrehzahl erhöhten Drehzahl ohne und mit als Anfahrassistent arbeitenden Drosselglied 29 dargestellt, wobei dieses zunächst nur eine Schließspule 82 aufweist.

Die Kurve e beschreibt den Verlauf der Motordrehzahl bei einer zu schnellen Einkuppelgeschwindigkeit beim Anfahren mit einer gegenüber der Leerlaufdrehzahl (n_Leerlauf) erhöhten Drehzahl. Die überhöhte Einkuppelgeschwindigkeit kann beispielsweise durch ein Abrutschen vom Kupplungspedal 30 entstehen. Die Motorleistung ist nicht ausreichend, um das Fahrzeug in der kurzen Einkuppelzeit auf eine Geschwindigkeit zu beschleunigen, die der Motormindestdrehzahl im eingelegten Gang entspricht. Die Drehzahl fällt unter die Abschaltgrenze (n_mot aus) des Motors 34, wodurch dieser abgewürgt wird.

Die Kurve f beschreibt einen Verlauf der Motordrehzahl mit aktiviertem Anfahrassistenten. Sobald die Eingriffsdrehzahl (n_Eingriff) erreicht wird, erfolgt eine Aktivierung des Drosselgliedes 29, welches daraufhin die Einkuppelgeschwindigkeit reduziert. Der Motor 34 hat somit ausreichend Zeit, das Fahrzeug mittels schlupfender Kupplung 12 auf eine ausreichend hohe Geschwindigkeit zu beschleunigen, ohne dass die Drehzahl unter die Abschaltgrenze (n_ mot aus) absinkt.

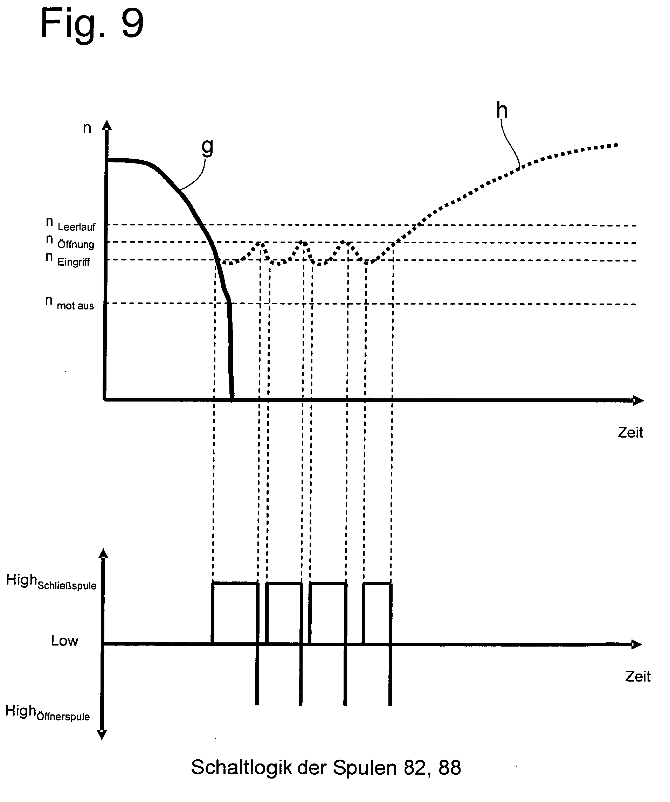

Fig. 9 beschreibt den zeitlichen Verlauf eines Anfahrvorganges bei einer gegenüber Leerlaufdrehzahl (n_Leerlauf) erhöhten Drehzahl ohne und mit als Anfahrassistent arbeitenden Drosselglied 29, welches eine Schließspule 82 und zusätzlich eine Öffnungsspule 88 aufweist. Dazu gibt Kurve g den Verlauf der Motordrehzahl bei einer zu schnellen Einkuppelgeschwindigkeit beim Anfahren mit einer gegenüber der Leerlaufdrehzahl (n_Leerlauf) erhöhten Drehzahl wieder. Diese zu hohe Einkuppelgeschwindigkeit kann beispielsweise durch ein Abrutschen vom Kupplungspedal 30 entstehen. Die Motorleistung ist nicht ausreichend, um das Fahrzeug in der kurzen Einkuppelzeit auf eine Geschwindigkeit zu beschleunigen, die der Motormindestdrehzahl im eingelegten Gang entspricht. Die Drehzahl fällt unter die Abschaltgrenze (n_mot aus) des Motors 34, woraufhin dieser abgewürgt wird.

Kurve h beschreibt diesen Verlauf der Motordrehzahl mit aktiviertem, zweispulig ausgeführten Anfahrassistenten. Sobald die Eingriffsdrehzahl (n_Eingriff) erreicht wird, reduziert das Drosselglied infolge der ab diesem Zeitpunkt aktivierten Schließspule 82 aufgrund der Auslegung des Kolbens 48 mit noch kleinerem Kanalquerschnitt die Einkuppelgeschwindigkeit noch stärker. Die Motordrehzahl stabilisiert sich schneller, wodurch auch der Drehzahlabfall gegenüber der Eingriffsgrenze (n_Eingriff) geringer ist und wobei die Drehzahl des Verbrennungsmotors 34 wieder vergleichsweise zügig über die Öffnungsgrenze (n_Öffnung) des Assistenten ansteigt. Die Öffnungsspule 88 wird kurzzeitig bestromt, um den Kolben 48 schnell von dem Anschlag 52 zu trennen und eine hochfrequente Regelung zu ermöglichen. Da das Fahrzeug noch nicht auf eine ausreichend hohe Geschwindigkeit beschleunigt wurde, fällt die Drehzahl wieder ab, der Assistent wird erneut aktiviert. Der Vorgang wiederholt sich solange, bis das Fahrzeug mittels schlupfender Kupplung 12 auf eine ausreichend hohe Geschwindigkeit beschleunigt wurde. Mit dieser höherfrequenten Regelung kann die zur Regelung notwendige Drehzahlbandbreite um die Eingriffsgrenze (n_Eingriff) geringer gehalten werden. Dies ist insbesondere dann von Vorteil, wenn die Leerlaufdrehzahl (n_Leerlauf) nahe an der Abschaltgrenze (n_mot_aus) des Motors 34 liegt.

Gemäß Fig. 5 kann bei denen mittels der Fig. 6-9 erläuterten Funktionsarten des Drosselgliedes 29 alternativ oder zusätzlich zum Signal des Drehzahlsensors 98 auch ein entsprechendes Signal des Drosselklappenstellungsgebers 100 von der Betriebszustandserfassungseinrichtung 94 als Entscheidungshilfe herangezogen werden und im Ergebnis alternativ oder zusätzlich zur Aktivierung des Drosselgliedes 29 über die Steuerung 102 des Verbrennungsmotors 34 eine kurzzeitig erhöhte Leistung vom Motor 34 abgerufen werden.

### III Regelbarer Peak Torque Limiter

Das Drosselglied 29 kann in einer Anordnung gemäß Fig. 5 auch die Funktion eines Peak Torque Limiters (PTL) zur Reduzierung einer Drehmomentspitzenbelastung des Antriebsstranges während des Einkuppelns mitübernehmen. Sobald und solange die Sensorik 96, 98, 100 Anzeichen einer Drehmomentüberlastung des Antriebsstranges beim Einkuppeln erkennt, wird die Schließspule 82 bestromt. Mittels vorzugsweise mehrerer Schließ-/Öffnungszyklen des Drosselgliedes 29 kann die Einkuppelgeschwindigkeit der Kupplung 12 und somit die Belastung des Antriebsstranges beim Einkuppeln auf einem zulässigem Niveau gehalten werden. Bei einem derartigen geregelten PTL reduziert sich die Rücklaufgeschwindigkeit des Kupplungspedals 12 nur während der Modulationszeit der Kupplung 12 und nicht während des gesamten Pedalweges, wodurch sich ein Komfortgewinn ergibt.

Durch die Regelung der PTL-Funktionalität ergibt sich eine weitgehend gleichbleibende Reduzierung der Drehmomentspitze beim Einkuppeln unabhängig von der Temperatur. Für die Betriebsart "Regelbarer PTL" des Drosselgliedes 29 empfiehlt sich aufgrund der hohen Dynamikanforderung ebenfalls eine Ausführung mit einer Öffnungsspule 88. Die Notwendigkeit eines Peak Torque Limiters im Fahrzeug ergibt sich immer dann, wenn aufgrund eines nahezu schlagartigen Schließens der Kupplung 12 ein sehr hoher Drehimpuls stoßartig in den Antriebstrang eingeleitet wird, welcher zu Schäden führen könnte. Ein geregelter PTL bietet den Vorteil, dass die Rücklaufgeschwindigkeit des Kupplungspedals nur in der Modulationszone der Kupplung 12 reduziert wird und nicht während des gesamten Pedalweges. Weiterhin ist die Temperatur des Fluids und somit dessen Viskosität weitgehend irrelevant für die Funktion.

Wie bereits ausgeführt, ist für den in den Antriebsstrang des Fahrzeuges über die Reibungskupplung 12 eingetragenen Drehimpuls die Einkuppelgeschwindigkeit von maßgeblicher Bedeutung. Da sich eine hohe Einkuppelgeschwindigkeit als ein steiler Gradient im Verlauf der Motordrehzahl widerspiegelt, kann als Sensorsignal für einen geregelten PTL wiederum auf die vom Drehzahlsensor 98 ermittelte Motordrehzahl zurückgegriffen werden. In der Betriebszustandserfassungseinrichtung 94 wird daraus ein Verzögerungswert berechnet, mit einem Sollwert verglichen und bei entsprechendem Ergebnis wird die Schließspule 82 bestromt, worauf die Einkuppelgeschwindigkeit reduziert und die Motordrehzahl langsamer abfällt. Ab dem Erreichen eines Öffnungsgrenzwertes wird die Schließspule 82-abgeschaltet und die Öffnungsspule 88 kurzzeitig bestromt. Wenn der Drehzahl-Verzögerungswert den vorgegebenen Grenzwert erneut einnimmt, wiederholt sich der Zyklus.

Die Auswertung des Stellungssensors 96 des Geberzylinders ist für die Funktion des geregelten Peak Torque Limiters ebenso sinnvoll, weil dadurch Betriebsfälle vermieden werden können, bei denen die Schließspule 82 unnötigerweise bestromt wird, während ein Auskuppelvorgang stattfinden könnte und somit die Schließkraft der Spule mit dem Fuß zusätzlich mit überwunden werden müsste. Die betreffenden Betriebsfälle sind beispielsweise starkes Abbremsen mit geschlossener Kupplung 12 und gleichzeitiges Auskuppeln oder starkes Hochdrehen des Motors 34 im Leerlauf und zeitgleiches Auskuppeln. Alternativ zur Sensierung der Geberzylinderstellung kann auch ein anderes bewegtes Element der hydraulischen Kupplungsbetätigungseinrichtung 10 sensiert werden.

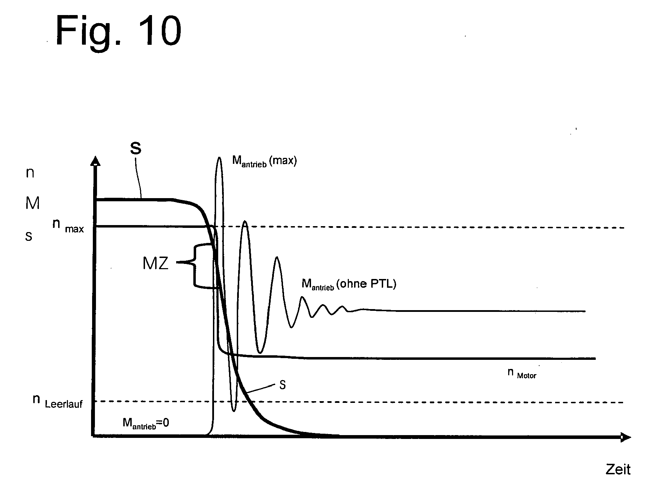

In Fig. 10 ist der Verlauf der Drehzahl n des Motors 34 bei einem Anfahrvorganges bei einer gegenüber Leerlaufdrehzahl erhöhten Drehzahl und schlagartigem Einkuppeln, z.B. beim Betriebsfall "Anfahren mit hoher Drehzahl und Pedalschnalzen", zunächst ohne Verwendung eines Peak Torque Limiters dargestellt. Zusätzlich sind entsprechende Verläufe für den Ausrück- bzw. Kupplungspedalweg s und für das Drehmoment M_antrieb des Antriebsstranges eingezeichnet. In ähnlicher Weise trifft Fig. 10 auch für den Betriebsfall "Fahrzeug rollt mit hoher Geschwindigkeit im ausgekuppelten Zustand mit Leerlaufdrehzahl, anschließend Pedalschnalzen" zu.

Der steile Gradient des Ausrückweges verdeutlicht eine hohe Schließgeschwindigkeit der Kupplung 12. Mit dem Erreichen der Modulationszone MZ der Kupplung 12 beim Einkuppeln ändert sich die Motordrehzahl n und des Antriebsstrangdrehmomentes M_antrieb. Der steile Abfall der Motordrehzahl n verursacht die Einleitung eines hohen Drehmomentpeaks in den Antriebsstrang, welches sich in Form einer gedämpften Schwingung wieder auf Normalmaß einpendelt. Aufgrund der Höhe des Drehmomentpeaks kann sich eine Beschädigung eines Bauteiles im Antriebsstrang ergeben.

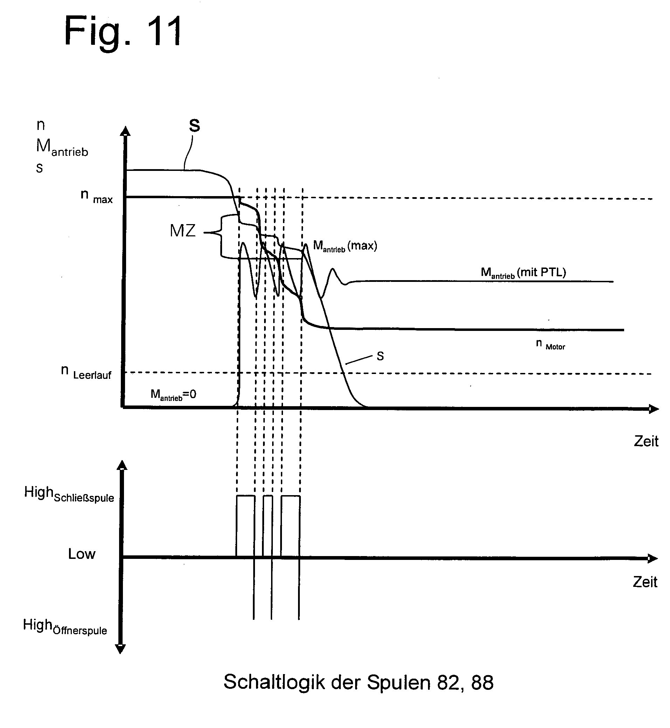

Fig. 11 beschreibt korrespondierend zu Fig. 10 den Verlauf eines Anfahrvorganges bei einer gegenüber Leerlaufdrehzahl n_Leerlauf erhöhten Motordrehzahl n und schlagartigem Einkuppeln, wobei ein als Peak Torque Limiter geregeltes Drosselglied 29 eingreift. In diesem Fall wird ab dem Erreichen eines voreingestellten Verzögerungsgrenzwertes der Motordrehzahl die Schließspule 82 bestromt. Die Motordrehzahl verringert sich ab diesem Zeitpunkt langsamer, bis sie einen zweiten Grenzwert für die Deaktivierung der Schließspule 82 und das kurzzeitige Bestromen der Öffnungsspule 88 erreicht. Von diesem Zeitpunkt steigt der Drehrzahl-Verzögerungswert wieder über den Grenzwert für das Schließen an und die Schließspule 82 wird wieder bestromt._Dieser Vorgang wird während der Modulationszeit der Kupplung 12 mehrfach wiederholt; wodurch die Kupplung 12 getaktet geschlossen wird. Statt eines einzelnen sehr starken Drehmomentpeaks werden bei diesem Vorgang mehrere kleinere Peaks in den Antriebsstrang eingeleitet und der Einkuppelvorgang einer Regelung unterworfen, wobei das Drosselglied 29 als Stellglied agiert.

Bei einer Ausführung des Drosselgliedes 29 mit einer zusätzlichen Öffnungsspule 88 werden gemäß der Fig. 7, 9 und 11 die Schließspule 82 und die Öffnungsspule 88 im Wechsel mit einem Strom, z.b. in Form von Rechteckimpulsen oder Peaks beaufschlagt. Es sind jedoch auch Betriebsweisen möglich, bei denen die Magnetspulen 82, 88 teilweise überlagernd mit einem sich kontinuierlich ändernden Strom beaufschlagt werden.

### IV Dämpfungsglied (Kribbelfilter)

In einer weiteren Betriebsart kann das Drosselglied 29 während des normalen Fahrbetriebs bei vollständig geschlossener Kupplung 12 und einer ausreichend hohen Motordrehzahl als Dämpfungsglied arbeiten und den Durchtritt von Fluid mittels Bestromung der Schließspule 82 im Wesentlichen unterbinden. Hierzu ist es besonders günstig den Durchmesser der Bohrung 54 im Kolben 48 besonders klein zu wählen oder ganz auf diese zu verzichten. Eine vergleichsweise klein ausgeführte Bohrung 54 wirkt als effektive Drosselstelle für einen von Kurbelwellenaxialschwingungen verursachten Mikrovolumenstrom. Auf diese Weise werden Vibrationen am Kupplungspedal 30 wirksam reduziert, welche der Fahrer spüren kann, wenn er seinen Fuß auf diesem abstellt. Sobald das Kupplungspedal 30 betätigt wird, wird die Bestromung der Spule 82 wieder abgeschaltet.

Für die Wirkungsweise als Vibrationsdämpfer zur Reduzierung eines Anlegekribbelns ist generell die einspulige Ausführung des Drosselgliedes 29, d.h. nur mit Schließspule 82, ohne Öffnungsspule 88, ausreichend. Als Eingangsgröße für die Betriebszustandserfassungseinrichtung 94 ist neben der Motordrehzahl auch ein Wegsignal des Geberzylinders 16 oder eines anderen bewegten Elementes des hydraulischen Betätigungssystems 10 notwendig. Die Schließspule 82 des Drosselgliedes 29 wird für diese Funktion immer dann bestromt, wenn die Motordrehzahl zwischen der Leerlaufdrehzahl und der Motormaximaldrehzahl liegt und das Kupplungspedal 30 in nahezu unbetätigter Stellung steht. Die Verlagerung des Kupplungspedals 30 durch leichtes Abstellen des Fußes kann toleriert werden. Als Signal für die Pedalstellung kann entweder ein Schaltpunktsignal oder ein kontinuierliches Signal verwendet werden. Wird das Kupplungspedal 30 in Richtung Auskuppeln bewegt, wird die Schließspule 82 stromlos geschaltet.

### Bezugszeichenliste

- 10: hydraulische Betätigungseinrichtung
- 12: Reibungskupplung
- 14: Chassis
- 16: Geberzylinder
- 18: Kolben des Geberzylinders
- 20: Nehmerzylinder
- 22: Kolben des Nehmerzylinders
- 24: Kupplungselement
- 26: Hydraulikleitung
- 27: Fluidkanal
- 28: Druckraum
- 29: Drosselglied
- 30: Kupplungspedal
- 32: Kupplungsgabel
- 34: Verbrennungsmotor
- 36: Schaltgetriebe
- 38: Gehäuse
- 40: Fluidanschluß
- 42: Fluidanschluß
- 44: Durchgangsbohrung
- 46: Mittelabschnitt
- 48: Kolben des Drosselgliedes
- 50: Anschlag
- 52: Anschlag
- 54: Durchgangsbohrung
- 56: Aufnahmekammer
- 58: Druckfeder
- 60: Axialsteg
- 62: Fluidkanal am Kolbenaußenumfang
- 64: Kanalabschnitt
- 66: Aufnahmekammer
- 68: Durchgangsbohrung
- 70: Dichtelement
- 72: Ringsteg
- 74: Ringnut
- 76: erster Dichtbereich
- 78: zweiter Dichtbereich
- 80: Ringsteg
- 82: Magnetspule, Schließspule
- 84: Isolierkörper
- 86: Rastverbindung
- 88: Magnetspule, Öffnungsspule
- 90: Ansteuerelektronik
- 92: Bordnetz
- 94: Betriebszustandserfassungseinrichtung
- 96: Stellungssensor für Geberzylinder
- 98: Drehzahlsensor
- 100: Drosselklappenstellungsgeber
- 102: Steuergerät des Verbrennungsmotors
- 104: Fahrzeugsteuerung
- MZ: Modulationszone

## Patentansprüche

1. Hydraulische Betätigungseinrichtung (10) für eine Reibungskupplung (12) eines Kraftfahrzeuges, welche einen mittels eines Kupplungspedals (30) betätigbaren Geberzylinder (16) und einen mit diesem über eine Hydraulikleitung (26) durch einen Fluidkanal (27) verbundenen Nehmerzylinder (20) umfasst, wobei die vorgenannten Elemente (16, 26, 28) einen Druckraum (28) bilden, in welchem ein Drosselglied (29) zur zeitweiligen Begrenzung des Fluidkanalquerschnitts angeordnet ist,
**dadurch gekennzeichnet,**
**dass** das Drosselglied (29) eine Ansteuervorrichtung (90) aufweist und bei Vorliegen mindestens eines, von einer Betriebszustandserfassungseinrichtung (94) erfassten vorbestimmten Betriebszustandes des Kraftfahrzeuges aktivierbar ist.

2. Hydraulische Betätigungseinrichtung nach Anspruch 1,
**dadurch gekennzeichnet, dass** mit dem Drosselglied der Fluidkanalquerschnitt frei wählbar zwischen einem Minimalwert und einem Maximalwert kontinuierlich eingestellbar ist.

3. Hydraulische Betätigungseinrichtung nach Anspruch 1 oder 2,
**dadurch gekennzeichnet, dass** bei Einnahme des Minimalwerts das Drosselglied den Fluidstrom vollständig sperrt.

4. Hydraulische Betätigungseinrichtung nach einem der Ansprüche 1 - 3,
**dadurch gekennzeichnet, dass** das Drosselglied mindestens ein Rückstellelement aufweist.

5. Hydraulische Betätigungseinrichtung nach einem der Ansprüche 1 - 4,
**dadurch gekennzeichnet, dass** ein Rückstellelement als Federelement ausgebildet ist.

6. Hydraulische Betätigungseinrichtung nach einem der Ansprüche 1 - 5,
**dadurch gekennzeichnet, dass** ein Rückstellelement durch die Ansteuervorrichtung aktivierbar ist.

7. Hydraulische Betätigungseinrichtung nach einem der Ansprüche 1 - 6,
**dadurch gekennzeichnet, dass** der Fluidkanalquerschnittt bei aktiviertem Drosselglied gegenüber demjenigen bei nichtaktiviertem Drosselglied reduziert ist.

8. Hydraulische Betätigungseinrichtung nach einem der Ansprüche 1 - 7,
**dadurch gekennzeichnet, dass** der vorbestimmte Betriebszustand durch einen Zustand der hydraulischen Betätigungseinrichtung selbst oder/und durch einen Zustand eines Verbrennungsmotors (34) zum Antrieb des Kraftfahrzeuges definiert ist.

9. Hydraulische Betätigungseinrichtung nach einem der Ansprüche 1 - 8,
**dadurch gekennzeichnet, dass** das Drosselglied (29) integral mit dem Geberzylinder (16), dem Nehmerzylinder (20) oder der Hydraulikleitung (26) ausgebildet ist.

10. Hydraulische Betätigungseinrichtung nach einem der Ansprüche 1 - 9,
**dadurch gekennzeichnet, dass** das Drosselglied (29) als separates Element ausgebildet ist.

11. Hydraulische Betätigungseinrichtung nach einem der Ansprüche 1 - 10,
**dadurch gekennzeichnet, dass** das Drosselglied (29) als Magnetventil (82, 48) ausgebildet ist und eine Magnetspule (82) sowie ein von dieser beeinflussbares und innerhalb des Fluidkanals (27) angeordnetes Ventilelement (48) umfasst,

12. Hydraulische Betätigungseinrichtung nach einem der Ansprüche 1 - 11,
**dadurch gekennzeichnet, dass** das Ventilelement als Kolben (48) ausgeführt ist, der in einem Gehäuse (38) des Drosselgliedes (29) zwischen zwei gehäusefesten Anschlägen (50, 52) verlagerbar ist.

13. Hydraulische Betätigungseinrichtung nach einem der Ansprüche 1 - 4, sowie 6 - 12,
**dadurch gekennzeichnet, dass** das Rückstellelement als Magnetspule ausgebildet ist.
